# EUROPEAN PATENT SPECIFICATION

(11) **EP 2 466 251 B1**
(45) Date of publication and mention of the grant of the patent: **13.02.2013**
(21) Application number: 10382339.9
(22) Date of filing: 16.12.2010
(51) Int. Cl.: G01B 3/56, G01B 21/04, B64D 45/00

(54) **Angle measuring device**
Winkelmessvorrichtung
Dispositif pour mesurer des angles

(43) Date of publication of application: 20.06.2012
(73) Proprietor: EADS Construcciones Aeronauticas, S.A., 28022 Madrid (ES)
(72) Inventor: Huertos Sanz, Rafael, 28019, Madrid (ES)
(74) Representative: Elzaburu Marquez, Alberto

(56) References cited:
- WO-A2-2007/074173
- US-A- 2 500 137

## Description

### FIELD OF THE INVENTION

The present invention refers to a device for calibrating angular displacement transducers and, more in particular, for calibrating angular displacement transducers used for measuring the deflections of aircraft mobile surfaces.

### BACKGROUND OF THE INVENTION

During the aircraft test flight phase it is usually necessary to take measurements of the angular variations in its mobile surfaces (ailerons, slats, vertical and horizontal rudders, etc.), be it to analyze the aerodynamic behaviour of these mobile surfaces or the influence of their position in other aspects of the aircraft behaviour during flight.

To that effect transducers, such as angular or linear potentiometers, have been traditionally installed in said mobile surfaces for obtaining measures of its position that can be recorded and analyzed adequately at a later time for the evaluation of the parameters required during the test flight campaign for the subsequent certification of the aircraft.

Precisely so that the data recorded during the test flight campaign of the aircraft to be certified can be correctly analyzed, the transducers which measure the position of the mobile surfaces must be correctly calibrated during the installation and tuning of the aircraft on the ground.

Up until now, the calibration of the potentiometers installed on the mobile aircraft surfaces for the measurement of its deflection angles has been done by the flight test instrumentation personnel in a nearly handmade way, that is to say, using rudimentary means such as rulers or graduated circular sectors acting as angle transporters.

The installation of these calibration means on the aircraft mobile surfaces is difficult and time consuming and the results obtained are not very exact.

Document US 2,500,137 A is known in the state of the art, providing an angle measuring instrument that indicates the angle of movement of a mobile surface with respect to a fixed surface. It is also known in the state of the art a movement mechanism setting an angle position of the landing flap of an airfoil for an aircraft, and a measurement apparatus for detection of the angle position of said flap, as those in WO 2007/074173 A2.

The present invention is intended to the solution of these problems.

### SUMMARY OF THE INVENTION

One object of the present invention is to provide a device able to measure with high precision the angle between a mobile surface and a fixed surface to which the mobile surface is connected.

Another object of the present invention is to provide methods and devices enabling the personnel in charge of doing the tuning of the aircraft on the ground to carry out a calibration of the transducers installed in the aircraft mobile surfaces to measure its deflections during the test flight campaign for the subsequent certification of the aircraft as accurately as possible.

Another object of the present invention is to provide methods and devices enabling the personnel in charge of doing the tuning of the aircraft on the ground to carry out a calibration of the transducers installed in the aircraft mobile surfaces to measure its deflections during the test flight campaign for the subsequent certification of the aircraft in a very simple way.

In one aspect, these and other objects are met by a device according to claim 1.

In one embodiment, said kinematic mechanism comprises five linked rods for translating the angle β between the mobile surface and the fixed surface to said angular displacement transducer. Hereby it is achieved a device that can be easily mounted on both surfaces and that can reach the required range of angular deflection between them.

According to the invention, said kinematic mechanism comprises a connecting part, preferably a roulette, to which are rotationally connected the rods that are also connected to the second base, the rod fixed to the angular displacement transducer and the rod which is not directly connected with the angular displacement transducer. Hereby it is achieved a device with a kinematic mechanism based on a parallelogram configuration that assures an accurate translation of the angle β between both surfaces to the transducer.

In another embodiment, said angular displacement transducer is a high precision radial potentiometer. Hereby it is achieved a suitable device for measuring the angle between a mobile surface and a fixed surface particularly when said surfaces belong to an aircraft.

In another aspect the above-mentioned objects are met by a calibration method according to claim 6.

Other features and advantages of the present invention will be understood from the following detailed description in relation with the enclosed drawings.

### DESCRIPTION OF THE FIGURES

Figure 1 shows, in two positions, an device according to this invention mounted on an aircraft lifting surface with a first base mounted on an aircraft mobile surface and a second base mounted on a fixed surface for carrying out a calibration method of transducers located in said mobile surface.
Figure 2 is a perspective view of an device according to this invention.

### DETAILED DESCRIPTION OF THE INVENTION

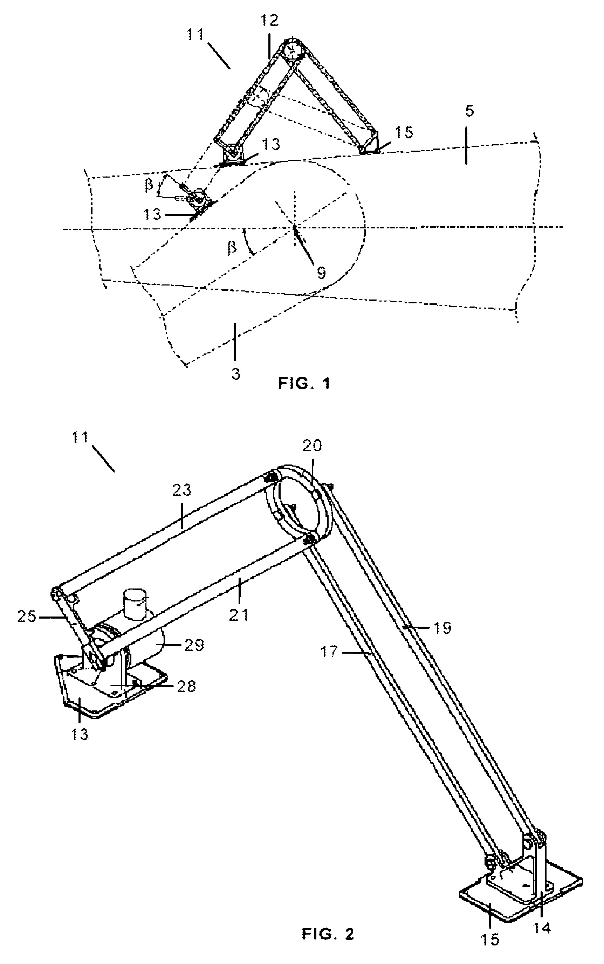

Following Figure 1 it can be seen an device 11 with a first base 13 mounted on an aircraft mobile surface 3 (such as an aileron) and a second base 15 mounted on an aircraft fixed surface 5 (such as a wing). The mobile surface 3 is rotationally connected to the fixed surface 5 along a hinge axis 9.

Figure 1 shows the device 11 in a first position where the mobile surface 3 is aligned with the fixed surface 5 and in a second position where the mobile surface 3 is deflected an angle β with respect to the fixed surface 5.

The device 11 is mounted on said surfaces 3, 5 to provide accurate measures of deflection angles of said mobile surface 3 for calibrating with great precision transducers (not shown) intended to measure in flight the relative movement of said mobile surface 3.

The device 11 carries a high precision transducer in the first base 13 which is electrically connected to a computer (not shown) having means for showing in an screen the number of degrees of deflection of the aircraft mobile surface 3 with respect to a "0" position which will have been predetermined at the beginning of the calibration. Said measures will be used by the flight test instrumentation personnel for calibrating the transducer to be used during the test flight campaign.

As shown in Figure 1, the device 11 comprises a kinematic mechanism 12 supported by said bases 13, 15 configured for translating the deflection angles β between the mobile surface 3 and the fixed surface 5 to the high precision transducer installed in the first base 13 mounted on the mobile surface 3.

In a preferred embodiment shown in Figure 2 the device 11 comprises the following elements:
a) Two mounting bases 13, 15 on, respectively, the aircraft mobile and fixed surfaces 3, 5. Each of them has three support points that allow that the mounting of the device 11 on the aircraft mobile and fixed surfaces 3, 5 be as stable as possible.
b) A high precision radial potentiometer 29 installed on a fitting 28 fixed with screws to the mounting base 13 for providing the value of the deflection angle β of the mobile surface 3.
c) A kinematic mechanism for translating a deflected angle β of the mobile surface 3 to the axis of the potentiometer 29 comprising:
   - a pair of rods 17, 19 connected by one end to a fitting 14 joined to the base 15 mounted on the fixed surface 5 and by the other end to a roulette 20;
   - a rod 21 connected by one end to the roulette 20 and by the other end fixed to the rotation axis of the potentiometer 29;
   - a rod 23 connected by one end to the roulette 20 and by the other end to a connecting rod 25 which in turn is fixed by the other end to the rotation axis of the potentiometer 29.

The rods 17, 19, 21, 23 have small ball joints installed in drill holes in their ends which will help the device 11 to absorb possible misalignments with respect to the hinge axis 9 of the aircraft mobile surface 3.

All mentioned connections are rotationally connections implemented by means of pins, nuts and washers, being the roulette 20 the element that assure that the pairs of rods 17, 19; 21, 23 maintain their parallelism, so that the exact angle of deflection β of the aircraft mobile surface 3 can be transmitted to the rotation axis of the potentiometer 29.

Any parts known by the skilled man may be used in said kinematic mechanism instead of said rods 17, 19, 21, 23, 25 and said roulette 20 if they perform the same functions.

With this geometry, the deflected angle β of the mobile surface 3 with respect to the fixed surface 5 of the aircraft is exactly the same as the angle rotated by the high precision radial potentiometer 29 (see Figure 1) because as the aircraft mobile surface 3 is made to rotate, the position the of high precision radial potentiometer 29 moves, and this drags the rod 21 from its initial position, so that this makes the roulette 20 rotate, which, in its turn, by forcing the whole kinematic mechanism to maintain its parallelogram geometry, transmits the initial movement to the axis of the high precision potentiometer 29 by means of the rod 23 and the connecting rod 25.

Although the present invention has been fully described in connection with preferred embodiments, it is evident that modifications may be introduced within the scope thereof, not considering this as limited by these embodiments, but by the contents of the following claims.

## Claims

1. Device (11) for measuring deflected angles (β) between a mobile surface (3) and a fixed surface (5) to which the mobile surface (3) is connected along a hinge axis (9), comprising:
- first and second bases (13, 15) to be mounted, respectively, in said mobile and fixed surfaces (3, 5);
- a kinematic mechanism (12) supported by said first and second bases (13, 15);
**characterized in that** it also comprises an angular displacement transducer (29) installed on said first base (13) and connected to a measuring equipment able to provide the measurement in degrees, the kinematic mechanism (12) comprising at least five linked rods (17, 19, 21, 23, 25) being arranged for translating the angle (β) between the mobile surface (3) and the fixed surface (5) to said angular displacement transducer (29), and **in that** the said kinematic mechanism (12) also comprises a connecting part (20) assuring that the rods of the kinematic mechanism (12) maintain their parallelism so that the deflected angle (β) of the mobile surface (3) with respect to the fixed surface (5) is exactly the same as the angle rotated by the angular displacement transducer (29).

2. Device (11) according to claim 1, wherein the rods (17, 19) that are also rotationally connected to the second base (15), the rod (21) fixed to the angular displacement transducer (29) and the rod (23) which is not directly connected with the angular displacement transducer (29) are rotationally connected to the connecting part (20).

3. Device (11) according to claim 2, wherein said connecting part (20) is a roulette.

4. Device (11) according to any of claims 1-3, wherein said angular displacement transducer (29) is a high precision radial potentiometer.

5. Device (11) according to any of claims 1-4, wherein said mobile and fixed surfaces (3, 5) belong to an aircraft.

6. Calibration method of a transducer used as an in-flight measuring device of the deflection angle between an aircraft mobile surface (3) and an aircraft fixed surface (5), **characterized by** comprising the following steps:
a) mounting a device (11) according to any of claims 1-5 over said aircraft mobile and fixed surfaces (3, 5) being the aircraft on the ground;
b) deflecting said mobile surface (3) to several positions and measuring in each of them the deflection angle (β) with said device (11);
c) using the measures obtained in step b) for calibrating said transducer.

## Patentansprüche

1. Vorrichtung (11) zum Messen von abgelenkten Winkeln (β) zwischen einer mobilen Fläche bzw. Oberfläche (3) und einer fixierten bzw. festen Fläche bzw. Oberfläche (5), mit der die mobile Fläche bzw. Oberfläche (3) entlang einer Scharnier- bzw. Gelenkachse (9) verbunden ist, umfassend:
- eine erste und eine zweite Basis (13, 15), die in der mobilen bzw. der fixierten Fläche (3, 5) zu montieren sind;
- einen kinematischen Mechanismus (12), der durch die erste und die zweite Basis (13, 15) gestützt bzw. getragen ist;
**dadurch gekennzeichnet, dass** sie auch einen Dreh- bzw. Winkelgeber bzw. Winkelmesswertgeber (29) umfasst, der an bzw. auf der ersten Basis (13) installiert ist und mit einer Messausrüstung verbunden ist, die fähig ist, die Messung in Grad bereitzustellen, wobei der kinematische Mechanismus (12) zumindest fünf gekoppelte bzw. verbundene Stangen (17, 19, 21, 23, 25) umfasst, die angeordnet sind, um den Winkel (β) zwischen der mobilen Fläche (3) und der fixierten Fläche (5) an den Winkelgeber (29) zu übersetzen bzw. umzusetzen, und dadurch, dass der kinematische Mechanismus (12) auch ein Verbindungsteil (20) umfasst, das sicherstellt, dass die Stangen des kinematischen Mechanismus (12) ihre Parallelität beibehalten, so dass der abgelenkte Winkel (β) der mobilen Fläche (3) bezüglich der fixierten Fläche (5) genau gleich dem bzw. der gleiche ist wie der durch den Winkelgeber (29) gedrehte Winkel.

2. Vorrichtung (11) nach Anspruch 1, wobei die Stangen (17, 19), die auch drehmäßig mit der zweiten Basis (15) verbunden sind, die Stange (21), die an dem Winkelgeber (29) fixiert bzw. befestigt ist, und die Stange (23), die nicht direkt mit dem Winkelgeber (29) verbunden ist, drehmäßig mit dem Verbindungsteil (20) verbunden sind.

3. Vorrichtung (11) nach Anspruch 2, wobei der Verbindungsteil (20) ein Roulette ist.

4. Vorrichtung (11) nach einem der Ansprüche 1-3, wobei der Winkelgeber (29) ein Hochpräzisionsradialpotentiometer ist.

5. Vorrichtung (11) nach einem der Ansprüche 1-4, wobei die mobile und die fixierte Fläche (3, 5) zu einem Flugzeug gehören.

6. Kalibrierungsverfahren eines Messwertgebers bzw. Gebers, der als eine In-flight- bzw. Bordmessvorrichtung für den bzw. des Ablenkungswinkels zwischen einer mobilen Fläche bzw. Oberfläche (3) eines Flugzeugs und einer fixierten bzw. festen Fläche bzw. Oberfläche (5) eines Flugzeugs verwendet wird, **dadurch gekennzeichnet, dass** es die folgenden Schritte umfasst:
a) Montieren einer Vorrichtung (11) nach einem der Ansprüche 1-5 über der mobilen und der fixierten Fläche bzw. Oberfläche (3, 5) des Flugzeugs, die bzw. das das Flugzeug am Boden ist;
b) Ablenken der mobilen Fläche bzw. Oberfläche (3) zu mehreren Positionen und Messen, in jeder von ihnen, des Ablenkungswinkels (β) mit der Vorrichtung (11);
c) Verwenden der in Schritt b) erhaltenen Messungen bzw. Maße zum Kalibrieren des Messwertgebers bzw. Gebers.

## Revendications

1. Dispositif (11) pour mesurer des angles de déviation (β) entre une surface mobile (3) et une surface fixe (5) à laquelle la surface mobile (3) est reliée le long d'un axe d'articulation (9), comprenant :
- des première et seconde bases (13, 15) destinées à être montées, respectivement, dans lesdites surfaces mobile et fixe (3, 5) ;
- un mécanisme cinématique (12) supporté par lesdites première et seconde bases (13, 15) ;
le dispositif étant **caractérisé en ce qu'**il comprend également un transducteur de déplacement angulaire (29) installé sur ladite première base (13) et relié à un équipement de mesure apte à fournir la mesure en degrés, le mécanisme cinématique (12) comprenant au moins cinq tiges reliées (17, 19, 21, 23, 25), étant agencé pour transférer l'angle (β) entre la surface mobile (3) et la surface fixe (5) audit transducteur de déplacement angulaire (29), et **en ce que** ledit mécanisme cinématique (12) comprend également une partie de connexion (20) garantissant que les tiges du mécanisme cinématique (12) conservent leur parallélisme de manière que l'angle de déviation (β) de la surface mobile (3) par rapport à la surface fixe (5) soit exactement le même que l'angle de rotation du transducteur de déplacement angulaire (29).

2. Dispositif (11) selon la revendication 1, dans lequel les tiges (17, 19) sont également reliées en rotation à la seconde base (15), la tige (21) fixée au transducteur de déplacement angulaire (29) et la tige (23) qui n'est pas directement reliée au transducteur de déplacement angulaire (29), étant reliées en rotation à la partie de connexion (20).

3. Dispositif (11) selon la revendication 2, dans lequel ladite partie de connexion (20) est une roulette.

4. Dispositif (11) selon l'une quelconque des revendications 1 à 3, dans lequel ledit transducteur de déplacement angulaire (29) est un potentiomètre radial de haute précision.

5. Dispositif (11) selon l'une quelconque des revendications 1 à 4, dans lequel lesdites surfaces mobile et fixe (3, 5) appartiennent à un aéronef.

6. Procédé d'étalonnage d'un transducteur utilisé comme dispositif de mesure en vol de l'angle de déviation entre une surface mobile (3) d'aéronef et une surface fixe (5) d'aéronef, le procédé étant **caractérisé en ce qu'**il comprend les étapes suivantes consistant à :
a) monter un dispositif (11) selon l'une quelconque des revendications 1 à 5, sur lesdites surfaces mobile et fixe (3, 5) d'aéronef, l'aéronef étant au sol ;
b) faire dévier ladite surface mobile (3) vers plusieurs positions et mesurer dans chacune d'elles l'angle de déviation (β) avec ledit dispositif (11) ;
c) utiliser les mesures obtenues à l'étape b) pour étalonner ledit transducteur.
